# EUROPÄISCHE PATENTANMELDUNG

(11) **EP 4 563 963 A1**
(43) Veröffentlichungstag der Anmeldung: **04.06.2025**
(21) Anmeldenummer: 23213111.0
(22) Anmeldetag: 29.11.2023
(51) Int. Cl.: G01M 11/06

(54) **KAMERAGESTÜTZTE POSITIONIERUNG EINES SCHEINWERFER-EINSTELL-PRÜFGERÄTS**

(71) Anmelder: Hella Gutmann Solutions GmbH, 79241 Ihringen (DE)
(72) Erfinder: Driewer, Adrian, 79241 Ihringen (DE); Ahring, Carsten, 79241 Ihringen (DE)
(74) Vertreter: Pfenning, Meinig & Partner mbB

(57) **Zusammenfassung**

Die vorliegende Erfindung betrifft ein Scheinwerfer-Einstell-Prüfgerät, SEP, mit einer Lichterfassungseinheit und einer Kamera, sowie ein Verfahren zum Positionieren eines solchen SEP.

## Beschreibung

Die vorliegende Erfindung betrifft ein Scheinwerfer-Einstell-Prüfgerät, SEP, mit einer Lichterfassungseinheit und einer Kamera, sowie ein Verfahren zum Positionieren eines solchen SEP.

Scheinwerfer von Fahrzeugen müssen in vielen Fällen auf eine bestimmte Weise ausgerichtet werden und sonstige bestimmte Bedingungen, wie gesetzliche Vorgaben, erfüllen. Eine Lichtverteilung, die der Scheinwerfer erzeugt, muss beispielsweise in einem bestimmten Höhenbereich liegen, außerdem sollte die Lichtverteilung in manchen Fällen eine bestimmte Form aufweisen.

Auch sollte das vom Scheinwerfer abgestrahlte Licht einen bestimmten Winkel zur Fahrbahn aufweisen. Zur Vermessung der vom Scheinwerfer erzeugten Lichtverteilung werden typischerweise Scheinwerfer-Einstell-Prüfgeräte, SEPs, verwendet, die vor dem Scheinwerfer positioniert werden und dazu eingerichtet sind, das vom Scheinwerfer emittierte Licht zu erfassen und die erzeugte Lichtverteilung gegebenenfalls zu vermessen. Der Scheinwerfer kann anschließend auf Basis der Ergebnisse der Vermessung eingestellt werden.

Für eine zuverlässige und korrekte Vermessung der vom Scheinwerfer generierten Lichtverteilung mit einem SEP ist es nötig, dass das SEP bezüglich des Fahrzeugs, insbesondere des Scheinwerfers, korrekt positioniert wird. Dabei sind sowohl der Abstand des SEP zum Scheinwerfer von Bedeutung als auch horizontale und vertikale Positionierung des SEP vor dem Scheinwerfer.

Herkömmlich wird das SEP manuell vor einem Scheinwerfer positioniert, wobei der Abstand des SEP zum Scheinwerfer und/oder die horizontale und vertikale Positionierung des SEP vor dem Scheinwerfer von einem Benutzer abgeschätzt werden. Das SEP kann dadurch nur ungenau vor dem Scheinwerfer positioniert werden. Weitere herkömmliche Methoden nutzen Kreuzlinienlaser, die Punkte oder Linien auf die Oberfläche des Scheinwerfers projizieren. Die Punkte oder Linien können jedoch auf der Glasoberfläche der Scheinwerfer schwer zu erkennen sein und bieten außerdem keine Möglichkeit, den Abstand zwischen SEP und Scheinwerfer zu ermitteln.

Aufgabe der vorliegenden Erfindung ist es daher, die Positionierung eines SEP bezüglich eines Fahrzeugs zu verbessern und/oder zu vereinfachen. Diese Aufgabe wird gelöst durch ein Scheinwerfer-Einstell-Prüfgerät gemäß Anspruch 1 sowie durch ein Verfahren gemäß dem nebengeordneten unabhängigen Verfahrensanspruch.

Gemäß einem Aspekt wird ein Scheinwerfeinstellgerät, SEP, aufweisend eine Lichterfassungseinheit, die dazu eingerichtet ist, eine von einem Scheinwerfer eines Fahrzeugs erzeugte Lichtverteilung zu erfassen, und eine erste Kamera, die dazu eingerichtet ist, den Scheinwerfer zu erfassen und eine erste Aufnahme des Scheinwerfers zu erzeugen, vorgeschlagen. Ein Fahrzeug kann dabei ein Verkehrs- oder Transportmittel sein, das über mindestens einen Scheinwerfer verfügt, beispielsweise ein ein- und/oder zweispuriges Kraftfahrzeug oder beispielsweise auch ein Zug.

Das SEP, insbesondere die Lichterfassungseinheit, kann dabei unter Verwendung der ersten Aufnahme des Scheinwerfers vor dem Scheinwerfer positioniert werden, bzw. die Ist-Position des SEP kann auf eine gewünschte Soll-Position gebracht werden. Die erste Kamera kann orts- und drehfest mit der Lichterfassungseinheit verbunden sein, sodass Änderungen der Position der Lichterfassungseinheit Änderungen des abgebildeten Scheinwerfers in der ersten Aufnahme bedingen. Wenn die Lichterfassungseinheit in horizontaler oder vertikaler Richtung verschoben wird, kann sich beispielsweise die Lage des abgebildeten Scheinwerfers in der ersten Aufnahme ändern. Auch kann sich beispielsweise die Größe der Abbildung des Scheinwerfers in der ersten Aufnahme ändern, wenn die Lichterfassungseinheit zum Scheinwerfer hin oder vom Scheinwerfer wegbewegt wird. Weiter können sich perspektivische Verzerrungen in der Abbildung des Scheinwerfers in der ersten Aufnahme ändern, wenn die Lichterfassungseinheit vor dem Scheinwerfer bewegt wird. Anhand der Lage, der Größe und/oder der perspektivischen Verzerrungen kann die Position des SEP bzw. Ist-Position des SEP, insbesondere der Lichterfassungseinheit, in Bezug auf den Scheinwerfer ermittelt oder zumindest abgeschätzt werden. Durch Kenntnis der aktuellen Position des SEP in Bezug auf den Scheinwerfer kann die Positionierung des SEP vor dem Scheinwerfer vereinfacht und/oder verbessert werden. Beispielsweise können Positionieranweisungen auf Grundlage der Position des SEP erzeugt werden, die von einem technischen Gerät, beispielsweise einem Aktor, oder einem Benutzer ausgeführt werden können, um die Ist-Position des SEP in eine Sollposition zu überführen.

Die Lichterfassungseinheit kann beispielsweise eine Kamera, insbesondere eine abbildende Optik zum Abbilden auf einen Schirm oder einen Sensor, beispielsweise einen CCD- oder CMOS-Sensor, aufweisen oder durch diese Einheit(en) gebildet sein. Die Lichterfassungseinheit kann beispielsweise ein Lichtsammelkasten sein. Die Lichterfassungseinheit kann dazu ausgebildet sein, vom Scheinwerfer erzeugtes Licht mittels der abbildenden Optik auf den Schirm oder den Sensor abzubilden. Dabei kann zumindest ein Abschnitt der vom Scheinwerfer erzeugten Lichtverteilung durch die Lichterfassungseinheit erfasst werden. Die abbildende Optik kann beispielsweise eine Fresnel-Linse sein oder aufweisen, vgl. unten. Die abbildende Optik weist in der Regel eine positive effektive Brechkraft auf. In den meisten Ausführungsformen ist die Lichterfassungseinheit derart ausgebildet, dass der Eintrittswinkel, unter dem ein Lichtstrahl oder Strahlenbündel auf die Lichterfassungseinheit trifft, vermessen werden kann. In manchen Ausführungsformen ist der Schirm oder der Sensor in der Brennebene der abbildenden Optik angeordnet. Dies kann beispielsweise bedeuten, dass der Schirm oder der Sensor senkrecht zur optischen Achse der abbildenden Optik ausgerichtet ist und der Abstand von Schirm oder Sensor zur Hauptebene der abbildenden Optik gleich der Brennweite der abbildenden Optik ist. Die abbildende Optik kann beispielsweise eine Fresnel-Linse sein und der Abstand zwischen Schirm oder Sensor und der Fresnel-Linse kann der Brennweite der Fresnel-Linse entsprechen.

Nachfolgend werden Eigenschaften der ersten Kamera beschrieben. Diese Eigenschaften können ebenso für eine zweite Kamera gelten. Wenn also nachfolgend von einer Kamera die Rede ist, so kann damit sowohl die erste Kamera als auch die zweite Kamera gemeint sein. Dies gilt ebenso, wenn Merkmale einer Aufnahme beschrieben werden. Diese Merkmale gelten sowohl für eine erste Aufnahme, die von der ersten Kamera erzeugt wird, als auch für eine zweite Aufnahme, die von der zweiten Kamera erzeugt wird.

Die erste und/oder zweite Kamera des SEP weist in den meisten Ausführungsformen eine abbildende Optik und einen Kamerasensor, beispielsweise einen CCD- oder CMOS-Sensor, auf. Der Kamerasensor kann dabei in der Bildebene der abbildenden Optik angeordnet sein, sodass die Kamera ein Bild eines Objekts, insbesondere des Scheinwerfers, auf den Kamerasensor abbildet. Die Kamera kann außerdem eine Blende aufweisen, die im Strahlengang der Kamera angeordnet ist, und deren Öffnungsgröße in manchen Fällen veränderbar sein kann. Zur Erzeugung der Aufnahme können beispielsweise die vom Kamerasensor erzeugten Daten der Abbildung genutzt werden. Der Scheinwerfer kann also durch die abbildende Optik auf den Kamerasensor abgebildet werden und die Daten des Kamerasensors nachfolgend als Aufnahme genutzt werden. Die Kamera erzeugt eine Abbildung, also einen Bildpunkt in einer Bildebene von einem Gegenstandspunkt, der in einer Objektebene angeordnet ist. Dies geschieht, indem Licht, das vom Gegenstandpunkt ausgeht, im Bildpunkt vereinigt wird. Die abbildende Optik der Kamera kann derart vor dem Kamerasensor angeordnet sein, dass sie eine Abbildung für ein Objekt erzeugt, das weniger als 2 m von der Kamera entfernt ist. Das kann bedeuten, dass die Objektweite bei der Abbildung der Kamera kürzer als 5 m, oder bevorzugt weniger als 3 m ist. Mit anderen Worten, fokussiert die Kamera ein Objekt, insbesondere den Scheinwerfer, das näher als 5 m, insbesondere näher als 3 m oder insbesondere näher als 1 m, insbesondere in einem Bereich zwischen 0,3 m und 0,7 m vor der Kamera angeordnet ist. Die Lichterfassungseinheit ist dagegen ausgebildet, alle Lichtstrahlen, die unter einem bestimmten Winkel in die Lichterfassungseinheit eintreten, in einem Bildpunkt zu vereinigen. Mit anderen Worten, erzeugt die Lichterfassungseinheit eine Abbildung von einem Objekt mit einer Objektweite, die gleich unendlich ist. Der Scheinwerfer, der durch die Kamera erfasst wird, ist derselbe Scheinwerfer, der die Lichtverteilung erzeugen kann, die durch die Lichterfassungseinheit erfasst wird.

Im Unterschied zur Lichterfassungseinheit ist die Kamera also dazu eingerichtet, den Scheinwerfer selbst abzubilden, während die Lichterfassungseinheit dazu eingerichtet ist, eine vom Scheinwerfer aktiv erzeugte Lichtverteilung zu erfassen und abzubilden. Kamera und Lichterfassungseinheit können sich dazu beispielsweise in den optischen Elementen sowie in der Anordnung der optischen Elemente unterscheiden, die zur Erzeugung der Abbildung verwendet werden. So kann der Sensor der Kamera in einem Abstand zur abbildenden Optik angeordnet sein, der kürzer oder größer ist als die Brennweite der abbildenden Optik. Der Sensor der Kamera ist also nicht in der Brennebene der abbildenden Optik angeordnet. Der Sensor der Lichterfassungseinheit kann stattdessen beispielsweise in der Brennebene der abbildenden Optik der Lichterfassungseinheit angeordnet sein.

Die Relativposition und/oder Relativausrichtung von Lichterfassungseinheit und Kamera ist festgelegt, festlegbar oder zumindest bestimmbar, bestimmt und/oder bekannt. In manchen Ausführungsformen sind die Lichterfassungseinheit und die Kamera ortsfest in Bezug aufeinander und/oder drehfest miteinander verbunden. Die Relativposition von Lichterfassungseinheit und Kamera kann dabei Translationsfreiheitsgrade, also insbesondere folgende Informationen umfassen: Abstände zwischen Lichterfassungseinheit und Kamera in zumindest einer, vorzugsweise zwei, besonders bevorzugt drei Raumrichtungen.

Die Relativausrichtung von Lichterfassungseinheit und Kamera kann die Ausrichtung, also Rotationsfreiheitsgrade, von Lichterfassungseinheit gegenüber der Kamera umfassen, wobei die Ausrichtung insbesondere die Ausrichtung der optischen Achse der Lichterfassungseinheit zur optischen Achse der Kamera umfasst. Die Ausrichtung kann dabei durch eine Winkelgröße, die den eingeschlossenen Winkel zwischen beiden optischen Achsen angibt oder vorzugsweise zwei Winkelgrößen, die ein Gier- und ein Nick-Winkelmaß angeben, beschrieben werden. In manchen Ausführungsformen kann beispielsweise ein Rollwinkel der Kamera, bzw. des Kamerasensors festgelegt oder bestimmbar sein. Der Rollwinkel der Kamera ist der Drehwinkel der Kamera um ihre optische Achse. Die Ausrichtung kann auch den Gier-, Nick- oder Rollwinkel der optischen Achse in Bezug auf ein Lot oder eine andere Referenz aufweisen. Der Rollwinkel der Kamera in Bezug auf ein Lot oder eine andere Referenz kann beispielsweise mit einem an der Kamera angeordneten Inklinometer bestimmt werden.

Im Rahmen dieser Offenbarung kann unter einer optischen Achse die optische Achse des ersten objektseitigen optischen Elements einer Vorrichtung angesehen werden. Am Beispiel der Kamera kann dies beispielsweise die optische Achse der Eingangslinse der Kamera sein. Bei der Lichterfassungseinheit kann die optische Achse in manchen Ausführungsformen die optische Achse der Fresnel-Linse sein. Die optische Achse eines optischen Elements kann beispielsweise durch eine Rotationssymmetrieachse jenes optischen Elements gegeben sein, beispielsweise die Rotationssymmetrieachse der Eingangslinse eines Kameraobjektivs oder beispielsweise durch die Rotationssymmetrieachse der Fresnel-Linse.

In vorteilhaften Ausführungsformen weist das SEP eine zweite Kamera auf, die dazu eingerichtet ist, den Scheinwerfer zu erfassen und eine zweite Aufnahme des Scheinwerfers zu erzeugen. Wie nachfolgend dargelegt wird, kann die zweite Kamera die Positionierung des SEP bezüglich des Scheinwerfers bzw. des Fahrzeugs weiter vereinfachen. Für die zweite Kamera gilt das zur ersten Kamera gesagte analog. Zudem kann die Relativposition von erster Kamera zu zweiter Kamera festgelegt oder bestimmt oder zumindest bestimmbar sein.

Gemäß einer weiteren Ausgestaltung weist das SEP einen Prozessor auf, der dazu eingerichtet ist, den Abstand zwischen Scheinwerfer-Einstell-Prüfgerät und Scheinwerfer auf Grundlage der ersten Aufnahme und der zweiten Aufnahme zu bestimmen. Unter Bestimmen ist hier und nachfolgend das Bestimmen im Rahmen einer Fehlertoleranz zu verstehen. Die Fehlertoleranz kann dabei weniger als 20 %, in manchen Fällen weniger als 10% betragen. Vorteilhafterweise werden die erste Aufnahme und die zweite Aufnahme zum gleichen Zeitpunkt aufgenommen und/oder zumindest zu Zeitpunkten, in denen das Fahrzeug bzw. der Scheinwerfer in der gleichen Position ist. Die erste und die zweite Aufnahme können auch zu verschiedenen Zeitpunkten aufgenommen werden und anschließend vom Prozessor genutzt werden.

Der Prozessor kann beispielsweise dazu eingerichtet sein, die Distanz auf Grundlage der ersten Aufnahme und der zweiten Aufnahme mittels eines Stereoskopieverfahrens zu bestimmen. Dazu kann ein Stereoskopieverfahren auf dem Prozessor implementiert sein. Der Prozessor kann beispielsweise dazu eingerichtet sein mittels Triangulation den Abstand der beiden Kameras zu einem Bereich des Scheinwerfers unter Verwendung der ersten Aufnahme und der zweiten Aufnahme und der Positionen der ersten Kamera und der Position der zweiten Kamera zu bestimmen. Der Bereich des Scheinwerfers, zu dem der Abstand mittels Triangulation bestimmt wird, kann beispielsweise von einem Nutzer bestimmt werden oder automatisch über Mustererkennung in beiden Aufnahmen anhand vordefinierter Bedingungen erkannt werden.

Der Prozessor kann beispielsweise zumindest eine CPU, ein FPGA, ein ASIC oder einen integrierten Schaltkreis aufweisen. In manchen Ausführungsformen kann das SEP weiter eine Speichereinheit aufweisen, die mit dem Prozessor kommunizieren kann und auf der ein Programm gespeichert ist, bei dessen Ausführung der Prozessor die Distanz zwischen dem Scheinwerfer-Einstell-Prüfgerät und dem Scheinwerfer bestimmen kann. In besonders vorteilhaften Ausführungsformen sind die Relativpositionen der ersten Kamera und der zweiten Kamera zueinander zumindest zum Zeitpunkt der Erzeugung der ersten und zweiten Aufnahme bekannt. Der Prozessor kann dann die Distanz zwischen dem Scheinwerfer-Einstell-Prüfgerät auf Grundlage der ersten Aufnahme, der zweiten Aufnahme und der Relativposition der ersten Kamera und der zweiten Kamera bestimmen.

In manchen Ausführungsformen des Scheinwerfer-Einstell-Prüfgeräts ist die erste Kamera in einer vertikalen Ebene, die durch die optische Achse der Lichterfassungseinheit verläuft, angeordnet und/oder die zweite Kamera in einer horizontalen Ebene, die durch die optische Achse der Lichterfassungseinheit verläuft, angeordnet. Die erste Kamera ist in manchen Ausführungsformen über oder unter der Lichterfassungseinheit angeordnet und die zweite Kamera neben der Lichterfassungseinheit angeordnet. Dies ermöglicht eine einfache Bestimmung der horizontalen oder vertikalen Position der Lichterfassungseinheit in Bezug auf den Scheinwerfer. In manchen Ausführungsformen können die erste Kamera, die zweite Kamera und die Lichterfassungseinheit in einer Ebene angeordnet sein, die senkrecht auf der optischen Achse der Lichterfassungseinheit steht.

In manchen Ausführungsformen des Scheinwerfer-Einstell-Prüfgeräts, ist die erste Kamera in Bezug zur Lichterfassungseinheit derart angeordnet, dass eine optische Achse der ersten Kamera in einer ersten gemeinsamen Ebene mit der optischen Achse der Lichterfassungseinheit liegt. Alternativ oder ergänzend kann die zweite Kamera in Bezug zur Lichterfassungseinheit derart angeordnet, dass eine optische Achse der zweiten Kamera in einer zweiten gemeinsamen Ebene mit der optischen Achse der Lichterfassungseinheit liegt. Das bedeutet, dass die optische Achse der ersten Kamera und/oder die optische Achse der zweiten Kamera nicht windschief zur optischen Achse der Lichterfassungseinheit angeordnet sind. Diese Ausführungsform ermöglicht eine einfache Bestimmung der Position der Lichterfassungseinheit in Bezug auf den Scheinwerfer entlang einer Richtung, die senkrecht zur gemeinsamen Ebene liegt. Insbesondere kann die Bestimmung der Position der Lichterfassungseinheit entlang jener Richtung unabhängig vom Abstand zwischen Lichterfassungseinheit oder erster oder zweiter Kamera und Scheinwerfer erfolgen.

Es sind außerdem Ausführungsformen möglich, in denen das Scheinwerfer-Einstell-Prüfgerät eine Anzeigevorrichtung aufweist. In manchen Ausführungsformen ist die Anzeigevorrichtung nicht Bestandteil des SEPs, sondern bildet zusammen mit dem SEP ein System. Unabhängig davon, ob die Anzeigevorrichtung Bestandteil des SEPs oder mit dem SEP ein System bildet, ist die Anzeigevorrichtung dazu eingerichtet ist, die von der ersten Kamera erzeugte erste Aufnahme und/oder die von der zweiten Kamera erzeugte zweite Aufnahme und/oder eine Positionierungshilfe und/oder Positionierungsanweisung anzuzeigen. Die Anzeigevorrichtung kann beispielsweise ein Bildschirm sein oder zumindest einen Bildschirm umfassen, auf dem die erste Aufnahme angezeigt wird und/oder auf dem die zweite Aufnahme angezeigt wird und/oder auf dem eine Positionierungshilfe angezeigt wird und/oder auf dem eine Positionierungsanweisung angezeigt wird. Die Anzeigevorrichtung kann beispielsweise auch durch ein externes Gerät wie ein Smartphone oder ein Tablet realisiert sein, das mit dem SEP ein System bildet und das entsprechende Daten des Scheinwerfer-Einstell-Prüfgeräts empfangen und anzeigen kann. In einigen dieser Ausführungsformen können die Positionierungshilfe und/oder die Positionierungsanweisung derart angezeigt werden, dass sie die erste und/oder zweite Aufnahme überlagern.

Eine Positionierungsanweisung kann beispielsweise eine Anweisung zum Verschieben des Scheinwerfer-Einstell-Prüfgeräts, insbesondere der Lichterfassungseinheit des Scheinwerfer-Einstell-Prüfgeräts, umfassen. Die Positionierungsanweisung kann beispielsweise durch einen Pfeil oder ähnlichem realisiert sein, der in die Richtung zeigt, in die das Scheinwerfer-Einstell-Prüfgerät oder die Lichterfassungseinheit verschoben werden soll, um in einer Sollposition vor dem Scheinwerfer positioniert zu sein. Die Sollposition kann vorbestimmt sein oder durch einen Benutzer mittels einer Eingabeeinheit eingegeben werden, oder anhand von weiter unten beschriebenen Fahrzeugdaten ermittelt werden. Die Eingabeeinheit kann Bestandteil des SEPs sein oder mit dem SEP ein System bilden. Die Eingabeeinheit kann beispielsweise ein Smartphone oder Tablet sein oder umfassen. Die Positionierungsanweisung kann im Allgemeinen eine Anweisung zur Positionierung des SEP sein, mit deren Hilfe das SEP in der bestimmungsgemäßen Sollposition positioniert werden kann. Die Positionierung kann dabei manuell durch einen Benutzer oder auch durch Motoren oder andere technische Geräte erfolgen, die die Anweisungen zur Positionierung ausführen und das SEP so in die bestimmungsgemäße Position überführen.

In einigen weiteren Ausführungsformen des Scheinwerfer-Einstell-Prüfgeräts mit Anzeigevorrichtung ist die Positionierungshilfe eine Gerade, die eine Abbildung der ersten gemeinsamen Ebene auf eine Bildebene der ersten Kamera ist, oder die eine Abbildung der zweiten gemeinsamen Ebene auf eine Bildebene der zweiten Kamera ist. In diesen Ausführungsformen kann die Positionierungshilfe, die eine Abbildung der ersten/zweiten gemeinsamen Ebene, in der eine optische Achse der ersten/zweiten Kamera und die optische Achse der Lichterfassungseinheit liegen, auf die Bildebene der ersten/zweiten Kamera ist, beispielsweise gemeinsam mit der ersten/zweiten Aufnahme auf der Anzeigevorrichtung angezeigt werden. Die Positionierungshilfe kann somit als Indikator für die Lage der optischen Achse der Lichterfassungseinheit, insbesondere entlang einer Richtung, die senkrecht zu der gemeinsamen Ebene oder der Positionierungshilfe liegt, genutzt werden.

Die Abbildung der ersten/zweiten gemeinsamen Ebene auf die Bildebene der ersten/zweiten Kamera kann beispielsweise durch einen Prozessor berechnet werden. Der Prozessor kann beispielsweise dazu eingerichtet sein, Abbildungsdaten jener Abbildung auf Grundlage der Relativposition von ersten/zweiter Kamera zur Lichterfassungseinheit und der Ausrichtung der ersten/zweiten Kamera in Bezug auf die Lichterfassungseinheit zu berechnen. Diese Abbildungsdaten können an die Anzeigevorrichtung übermittelt werden. Die Abbildungsdaten können ebenfalls von der Anzeigevorrichtung gemeinsam mit der ersten/zweiten Aufnahme angezeigt werden. Das Scheinwerfergerät kann also einen Prozessor aufweisen, der dazu eingerichtet ist, die Abbildung der ersten/zweiten gemeinsamen Ebene auf die Bildebene der ersten/zweiten Kamera zu berechnen.

In manchen Ausführungsformen sind unabhängig davon die optische Achse der ersten Kamera und die optische Achse der Lichterfassungseinheit derart angeordnet, dass sie einen Winkel von weniger als 30°, oder weniger als 15° einschließen, oder zueinander parallel sind.

In weiteren Ausführungsformen ist die erste Kamera und/oder die zweite Kamera adaptiv an die Aufnahmeverhältnisse, insbesondere die vom Scheinwerfer erzeugte Lichtverteilung, konfigurierbar. Unter den Aufnahmeverhältnissen sind insbesondere die Helligkeit des aufgenommenen Bereichs zu verstehen. In manchen Fällen kann es vorkommen, dass die erste Kamera und/oder die zweite Kamera zumindest oder höchstens einen Teil des vom Scheinwerfer erzeugten Lichts erfasst. Dies kann beispielsweise durch direkte Erfassung eines Abschnitts der Lichtverteilung oder durch Erfassung von Streulicht erfolgen. Konfigurieren der ersten und/oder zweiten Kamera kann beispielsweise Verringerung der Belichtungszeit oder Anpassung einer Blendengröße der ersten Kamera und/oder zweiten Kamera umfassen. Dadurch kann beispielsweise eine Sättigung des jeweiligen Kamerasensors verhindert oder zumindest der Anteil gesättigter Bereiche des Kamerasensors reduziert werden. Unter adaptivem Konfigurieren der Kamera an die Aufnahmeverhältnisse kann also beispielsweise die Anpassung der Belichtungszeit der Kamera an die Helligkeitsverhältnisse, insbesondere an die Helligkeit der erzeugten Lichtverteilung, verstanden werden.

Unabhängig davon kann das Scheinwerfer-Einstell-Prüfgerät in manchen Ausführungsformen einen Prozessor aufweisen, der dazu eingerichtet ist, auf Grundlage der ersten Aufnahme und/oder der zweiten Aufnahme Scheinwerferinformationen des Scheinwerfers zu erzeugen. Der Prozessor kann dabei der selbe oder gleiche Prozessor wie oben beschrieben sein. Der Prozessor kann beispielsweise auch dazu eingerichtet sein, aus den Scheinwerferinformationen Daten abzuleiten, insbesondere einen Scheinwerfertyp, einen Fahrzeugtyp, einen Sollabstand und/oder eine Sollpositionen des Scheinwerfer-Einstell-Prüfgeräts vor dem Fahrzeug. Der Prozessor kann also insbesondere auch dazu eingerichtet sein, auf Grundlage der erfassten ersten und/oder zweiten Aufnahme des Scheinwerfers das Fahrzeug zu identifizieren. Die Scheinwerferinformationen können beispielsweise auch Schäden an den Scheinwerfern umfassen. Diese Information können beispielsweise zur Unterstützung des Benutzers bei der Positionierung des Scheinwerfer-Einstell-Prüfgeräts verwendet werden. Auch können diese Informationen verwendet werden um Sollabstände von Scheinwerfer-Einstell-Prüfgerät zum Scheinwerfer zu ermitteln und dabei beispielsweise Anweisungen zur Positionierung des SEP ausgeben, mit deren Hilfe das SEP in die bestimmungsgemäße Position positioniert werden kann. Die Positionierung kann dabei manuell durch einen Benutzer oder auch durch Motoren oder andere technische Geräte erfolgen, die die Anweisungen zur Positionierung ausführen.

Das Scheinwerfer-Einstell-Prüfgerät kann in manchen Ausführungsformen eine Speichereinheit aufweisen, die dazu eingerichtet ist, die Scheinwerferinformationen des Scheinwerfers und/oder die abgeleiteten Daten zu speichern. Unabhängig davon kann das Scheinwerfer-Einstell-Prüfgerät in weiteren Ausführungsformen eine Speichereinheit aufweisen, die dazu eingerichtet ist, eine erste Aufnahme und/oder zweite Aufnahme zu speichern und/oder ermittelte Abstände zu speichern. Die Speichereinheit kann dabei dieselbe oder die gleiche Speichereinheit sein, wie die oben beschriebene Speichereinheit.

Gemäß einem weiteren Aspekt der vorliegenden Anmeldung wird ein Verfahren zum Positionieren eines zuvor beschriebenen Scheinwerfer-Einstell-Prüfgeräts vor einem Scheinwerfer vorgeschlagen, aufweisend die Schritte: Erzeugen einer oder mehrerer von ersten Aufnahme des Scheinwerfers mit der ersten Kamera; und Verwenden der erzeugten erste/n Aufnahme/n zur Positionierung des Scheinwerfer-Einstell-Prüfgeräts vor dem Scheinwerfer. In manchen Ausführungsformen ist der Scheinwerfer bei Erzeugung der ersten oder mehreren ersten Aufnahmen ausgeschaltet oder in einem Betriebsmodus, in dem der Scheinwerfer die Lichtverteilung erzeugt, die von der Lichterfassungseinheit vermessen werden kann.

In Ausführungsformen, in denen das Scheinwerfer-Einstell-Prüfgerät eine zweite Kamera aufweist, kann das Verfahren weiter die folgenden Schritte aufweisen:
Erzeugen einer oder mehrerer von zweiten Aufnahmen des Scheinwerfers mit der zweiten Kamera; und Verwenden der erste/n Aufnahme/n und der zweite/n Aufnahme/n zur Positionierung des Scheinwerfer-Einstell-Prüfgeräts vor dem Scheinwerfer.

Optional kann das Verfahren weiter die Schritte aufweisen:
Bestimmen eines Abstands zwischen Scheinwerfer und Lichterfassungseinheit auf Grundlage der erste/n Aufnahme/n und zweite/n Aufnahme/n. Ein weiterer optionaler Schritt kann das Positionieren des Scheinwerfer-Einstell-Prüfgeräts derart, dass der Abstand zwischen Scheinwerfer und Lichterfassungseinheit einem Sollabstand entspricht, umfassen.

Das Bestimmen eines Abstands kann beispielsweise durch einen Prozessor ausgeführt werden. In den meisten Ausführungsformen wird der Abstand zwischen Scheinwerfer und Lichterfassungseinheit auf Grundlage der erste/n Aufnahme/n und zweite/n Aufnahme/n und den Relativpositionen von erster Kamera, zweiter Kamera und Lichterfassungseinheit zueinander bestimmt, insbesondere durch einen Prozessor bestimmt. Ein weiterer Schritt kann beispielsweise auch das Erfassen von Relativpositionen von erster Kamera, zweiter Kamera und Lichterfassungseinheit zueinander erfasst werden. Die Relativpositionen können beispielsweise festgelegt sein und in einer Speichereinheit hinterlegt sein, auf die der Prozessor zugreifen kann. Relativpositionen können beispielsweise auch teilweise durch Lagesensoren erfassbar sein oder von einem Benutzer eingegeben werden.

Das Positionieren kann beispielsweise manuell durch einen Benutzer oder durch geeignete Motoren oder andere technische Geräte erfolgen, die das Scheinwerfer-Einstell-Prüfgerät derart positionieren, dass der Abstand zwischen Scheinwerfer-Einstell-Prüfgerät und Scheinwerfer dem Sollabstand entspricht. Beispielsweise kann eine Differenz zwischen dem Ist-Abstand und dem Sollabstand ermittelt werden. Anhand der Differenz kann die Bewegungsstrecke bestimmt werden, um die das SEP bewegt werden muss, sodass der Abstand dem Sollabstand entspricht. Anhand des Vorzeichens dieser Differenz kann beispielsweise die Bewegungsrichtung bestimmt werden, mit der die Differenz verringert werden kann.

Unabhängig davon kann das Verfahren die folgenden Schritte aufweisen:
Anzeigen der erzeugten erste/n Aufnahme/n und/oder zweite/n Aufnahme/n und einer ersten Positionierungshilfe und/oder zweiten Positionierungshilfe mittels einer Anzeigevorrichtung, wobei die Positionierungshilfen Geraden sind. Das Verfahren kann weiter die Schritte aufweisen: Positionieren des Scheinwerfer-Einstell-Prüfgeräts vor dem Scheinwerfer derart, dass die erste Positionierungshilfe einen vorbestimmten Abschnitt in der/den erste/n Aufnahme/n des Scheinwerfers schneidet, und/oder
dass die zweite Positionierungshilfe den vorbestimmten Abschnitt in der/den zweite/n Aufnahme/n des Scheinwerfers schneidet.

Auch hier kann die Positionierung durch einen Benutzer oder durch technische Geräte, wie Aktoren, die Positionierungsanweisungen ausführen, ausgeführt werden.

In einigen Ausführungsformen weist das Verfahren weiter die folgenden Schritte auf:
Erzeugen einer Lichtverteilung durch den Scheinwerfer; Erfassen der vom Scheinwerfer erzeugten Lichtverteilung durch die Lichterfassungseinheit; und
Ausrichten des Scheinwerfers derart, dass die erfasste Lichtverteilung vorbestimmte Kriterien erfüllt. Vorbestimmte Kriterien können beispielsweise die Position einer Hell-Dunkel-Grenze in der erfassten Lichtverteilung sein.

Merkmale des Scheinwerfer-Einstell-Prüfgeräts können mit den Merkmalen des Verfahrens kombiniert werden und umgekehrt.

Nachfolgend soll die Erfindung anhand von acht Figuren erläutert werden.

Es zeigt
- Fig. 1: eine erste Ausführungsform eines Scheinwerfer-Einstell-Prüfgeräts, mit einer ersten Kamera und einer zweiten Kamera.
- Fig. 2: eine zweite Ausführungsform eines Scheinwerfer-Einstell-Prüfgeräts, das vor einem Fahrzeug angeordnet ist, in Draufsicht.
- Fig. 3: eine dritte Ausführungsform eines Scheinwerfer-Einstell-Prüfgeräts, das vor einem Fahrzeug angeordnet ist, in Draufsicht.
- Fig. 4: die dritte Ausführungsform eines Scheinwerfer-Einstell-Prüfgeräts, das vor einem Fahrzeug angeordnet ist, in einer Seitenansicht, mit Blickrichtung entlang der optischen Achse der Lichterfassungseinheit.
- Fig. 5: eine vierte Ausführungsform eines Scheinwerfer-Einstell-Prüfgeräts, das vor einem Fahrzeug angeordnet ist, in einer Seitenansicht, mit Blickrichtung entlang der optischen Achse der Lichterfassungseinheit.
- Fig. 6: eine fünfte Ausführungsform eines Scheinwerfer-Einstell-Prüfgeräts, das in verschiedenen Positionen vor einem Fahrzeug angeordnet ist, in einer Seitenansicht, mit Blickrichtung entlang der optischen Achse der Lichterfassungseinheit.
- Fig. 7: ein Blockdiagramm, das Schritte einer Ausführungsform des vorgeschlagenen Verfahrens zeigt.
- Fig. 8: ein Blockdiagramm, das Schritte einer weiteren Ausführungsform des vorgeschlagenen Verfahrens zeigt.

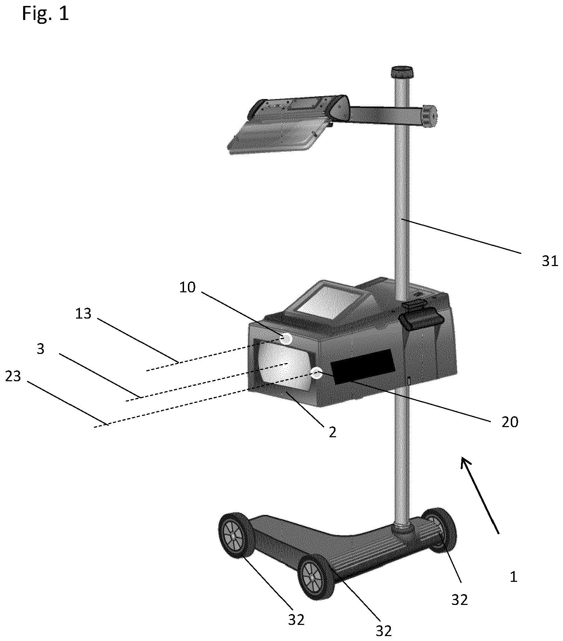

Fig. 1 zeigt ein Scheinwerfer-Einstell-Prüfgerät, SEP, 1 mit einer ersten Kamera 10, einer zweiten Kamera 20 und einer Lichterfassungseinheit 2. In Fig. 1 sind die optische Achse 3 der Lichterfassungseinheit 2, die optische Achse 13 der ersten Kamera 10 und die optische Achse 23 der zweiten Kamera 20 jeweils als eine gestrichelte Linie dargestellt.

Die erste Kamera 10 ist in der dargestellten Ausführungsform in einer vertikalen Ebene, die durch die optische Achse 3 der Lichterfassungseinheit 2 verläuft, angeordnet. Die erste Kamera 10 ist dabei orts- und drehfest gegenüber der Lichterfassungseinheit 2 angeordnet. Das bedeutet, dass die Relativposition zwischen Lichterfassungseinheit 2 und erster Kamera 10 festgelegt ist. Die beiden optischen Achsen 3, 13 sind in einer gemeinsamen Ebene 12 angeordnet, die in dieser Ausführungsform eine vertikale Ebene ist. Die erste Kamera 10 ist derart ausgerichtet, dass ihre optische Achse 13 parallel zur optischen Achse 3 der Lichterfassungseinheit 2 verläuft. Es sind allerdings auch Ausführungsformen möglich, in denen die optische Achse 13 der ersten Kamera 10 mit der optischen Achse 3 der Lichterfassungseinheit 2 einen Winkel einschließt, beispielsweise in dem die erste Kamera 10 nach unten oder nach oben geneigt ist. Im Allgemeinen sind alle Positionierungen von erster Kamera 10 bezüglich der Lichterfassungseinheit 2 möglich, in denen die Lichterfassungseinheit 2 das von einem Scheinwerfer 5 erzeugte Licht erfassen kann und die erste Kamera 10 jenen Scheinwerfer 5 erfassen kann, der dieses Licht erzeugt. Die erste Kamera 10 kann dabei jene Seite des Scheinwerfers 5 erfassen, von der das erzeugte Licht abgestrahlt wird. Die erste Kamera 10 weist eine abbildende Optik und einen Sensor auf und ist dazu eingerichtet, den Scheinwerfer 5 auf den Sensor der Kamera 10 abzubilden. Die erste Kamera 10 kann beispielsweise auch eine Blende aufweisen, die im Strahlengang der ersten Kamera 10 angeordnet ist.

Die zweite Kamera 20 ist in der Ausführungsform der Fig. 1 in einer horizontalen Ebene, die durch die optische Achse 3 der Lichterfassungseinheit 2 verläuft, angeordnet. Die zweite Kamera 20 ist orts- und drehfest gegenüber der Lichterfassungseinheit 2 angeordnet. Das bedeutet, dass die Relativposition und Relativausrichtung zwischen Lichterfassungseinheit 2 und zweiter Kamera 20 festgelegt ist. Die zweite Kamera 20 ist derart ausgerichtet, dass ihre optische Achse 23 parallel zur optischen Achse 3 der Lichterfassungseinheit 2 verläuft. Es sind allerdings auch Ausführungsformen möglich, in denen die optische Achse 23 der zweiten Kamera 20 mit der optischen Achse 3 der Lichterfassungseinheit 2 einen Winkel einschließt, beispielsweise in dem die zweite Kamera 20 in Richtung der optischen Achse 3 der Lichterfassungseinheit 2 oder davon weg gedreht ist. Beide optischen Achsen 3, 23 sind in einer gemeinsamen Ebene 22 angeordnet, die in dieser Ausführungsform eine horizontale Ebene ist. Im Allgemeinen sind alle Positionen von zweiter Kamera 20 bezüglich der Lichterfassungseinheit 2 möglich, in denen die Lichterfassungseinheit 2 das von einem Scheinwerfer 5 erzeugte Licht erfassen kann und die zweite Kamera 20 den Scheinwerfer 5 erfassen kann. Die zweite Kamera 20 kann dabei jene Seite des Scheinwerfers 5 erfassen, von der das erzeugte Licht abgestrahlt wird. Die zweite Kamera 20 weist eine abbildende Optik und einen Sensor auf und ist dazu eingerichtet, den Scheinwerfer 5 auf den Sensor der zweiten Kamera 20 abzubilden. Die zweite Kamera 20 kann beispielsweise auch eine Blende aufweisen, die im Strahlengang der zweiten Kamera 20 angeordnet ist.

Die erste Kamera 10 und/oder die zweite Kamera 20 können adaptiv an die Aufnahmeverhältnisse, insbesondere die vom Scheinwerfer 5 erzeugte Lichtverteilung oder deren Helligkeit, konfigurierbar sein. Dies kann beispielsweise durch eine Anpassung der Belichtungszeit oder einer Blendenöffnungsgröße der ersten Kamera 10 und/oder der zweiten Kamera 20 an die Helligkeitsverhältnisse erfolgen.

Das SEP 1 der Fig. 1 weist weiter eine Stativanordnung 31 auf, an der die Lichterfassungseinheit 2 dreh- und höhenverstellbar gelagert ist. Die Stativanordnung weist Verschiebemittel 32 auf, mit der das gesamte SEP 1 in lateraler Richtung verschiebbar ist. Die Verschiebemittel 32 sind in der Ausführungsform der Figur 1 durch Rollen realisiert. Es sind ebenfalls Schienensysteme möglich auf denen das SEP 1 beispielsweise gleiten kann oder die Rollen des SEP 1 rollen können.

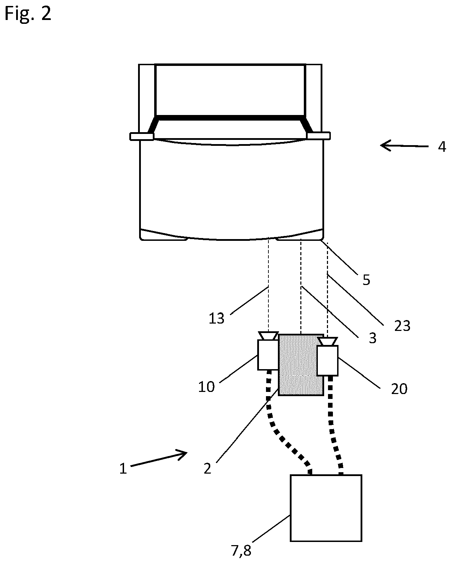

Fig. 2 zeigt eine schematische Darstellung einer Ausführungsform des SEP 1 in Draufsicht. Das SEP 1 ist vor einem Scheinwerfer 5 eines Fahrzeugs 4 angeordnet. Das SEP 1 weist eine Lichterfassungseinheit 2, eine erste Kamera 10 und eine zweite Kamera 20 auf. Das SEP 1 weist weiter einen Prozessor 7 und/oder eine Anzeigevorrichtung 8 auf. Die erste Kamera 10 und die zweite Kamera 20 sind über Signalleitungen mit dem Prozessor 7 und/oder der Anzeigevorrichtung 8 verbunden. Die erste Kamera 10 und/oder die zweite Kamera 20 können Daten über die Signalleitungen zum Prozessor 7 oder zur Anzeigevorrichtung 8 senden. Es sind allerdings auch Ausführungsformen möglich, in denen solche Daten drahtlos zur Anzeigevorrichtung 8 oder zum Prozessor 7 übermittelt werden können. Die Anzeigevorrichtung 8 kann beispielsweise dazu eingerichtet sein, eine erste Aufnahme der ersten Kamera 10 anzuzeigen und/oder eine zweite Aufnahme der zweiten Kamera 20 anzuzeigen. Die Anzeigevorrichtung 8 kann beispielsweise auch dazu eingerichtet sein, eine Positionierungsanweisung anzuzeigen. Die Positionierungsanweisung kann beispielsweise durch einen Pfeil oder ähnlichem realisiert sein, der in die Richtung zeigt, in die das Scheinwerfer-Einstell-Prüfgerät 1 oder die Lichterfassungseinheit 2 verschoben werden soll, um in einer Sollposition vor dem Scheinwerfer 5 positioniert zu sein. Die Anzeigevorrichtung 8 kann in manchen Ausführungsformen auch durch ein mobiles Endgerät, beispielsweise ein Smartphone oder Tablet, realisiert sein. In diesen Fällen ist die Anzeigevorrichtung 8 nicht Bestandteil des SEP 1, sondern bildet zusammen mit dem SEP 1 ein System.

Der Prozessor 7 kann beispielsweise dazu eingerichtet sein, auf Grundlage der ersten Aufnahme 11 der ersten Kamera 10 und/oder der zweiten Aufnahme 21 der zweiten Kamera 20 einen Abstand zwischen den Kameras 10, 20 und dem Fahrzeug 4 insbesondere dem Scheinwerfer 5 zu berechnen. Eine derartige Abstandsberechnung kann bei Kenntnis der Relativposition der beiden Kameras 10, 20 zueinander beispielsweise mittels Triangulationsverfahren erfolgen. Der Prozessor 7 kann weiter dazu eingerichtet sein, den Abstand der Lichterfassungseinheit 2 zum Fahrzeug 4 insbesondere dem Scheinwerfer 5 zu berechnen. Dieser Abstand kann unter Verwendung der Relativposition der beiden Kameras, also der ersten Kamera 10 und der zweiten Kamera 20, zur Lichterfassungseinheit 2, bestimmt werden. Die Anzeigevorrichtung 8 kann beispielsweise dazu eingerichtet sein, den berechneten Abstand anzuzeigen. Der Prozessor 7 kann beispielsweise auch dazu eingerichtet sein, auf Grundlage der ersten Aufnahme 11 und/oder der zweiten Aufnahme 21 Scheinwerferinformationen des Scheinwerfers 5 zu erzeugen. Dabei kann der Prozessor 7 weiter dazu eingerichtet sein, aus den Scheinwerferinformationen Daten abzuleiten, insbesondere einen Scheinwerfertyp, einen Fahrzeugtyp, einen Sollabstand und/oder eine Sollpositionen des Scheinwerfer-Einstell-Prüfgeräts 1 vor dem Fahrzeug 4. Der Prozessor 7 kann also insbesondere auch dazu eingerichtet sein, auf Grundlage der erfassten ersten 11 und/oder zweiten Aufnahme 21 des Scheinwerfers 5 das Fahrzeug 4 zu identifizieren. Die Scheinwerferinformationen können beispielsweise auch Schäden an dem Scheinwerfer 5 umfassen.

Das SEP 1 kann beispielsweise auch eine Speichereinheit aufweisen, mit der der Prozessor 8 kommunizieren kann und auf der ein Programm gespeichert ist, bei dessen Ausführung der Prozessor 8 beispielsweise die Distanz zwischen dem Scheinwerfer-Einstell-Prüfgerät 1 und dem Scheinwerfer 5 bestimmen kann. Weiter kann die Speichereinheit dazu eingerichtet sein, die Scheinwerferinformationen oder die vom Prozessor 8 aus den Scheinwerferinformationen abgeleiteten Daten zu speichern und/oder die erste Aufnahme 11 und/oder die zweite Aufnahme 21 zu speichern.

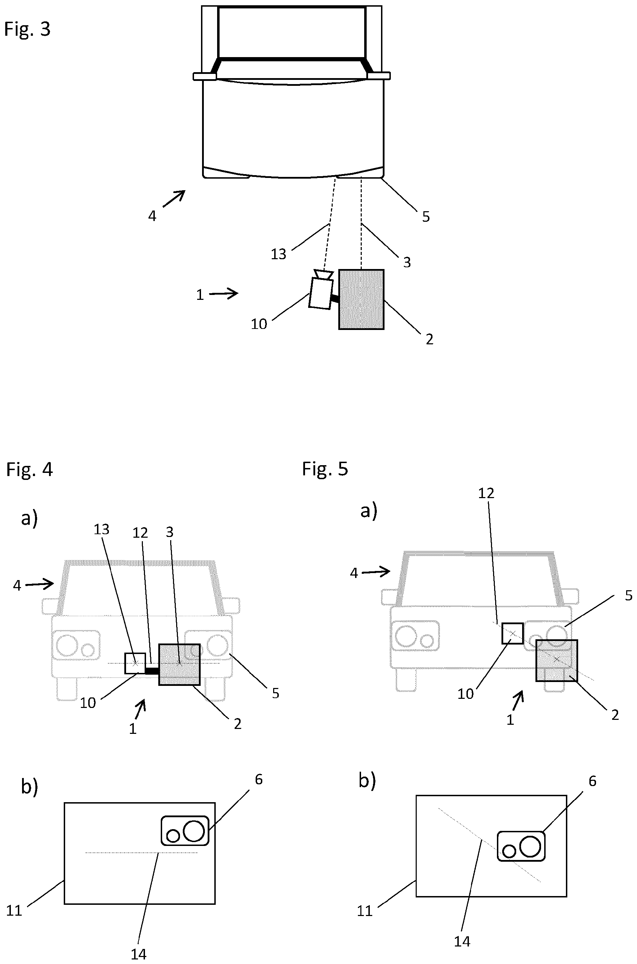

Fig. 3 zeigt eine weitere Ausführungsform eines SEP 1 in Draufsicht. Die Ausführungsform der Fig.3 ist im Wesentlichen die gleiche wie die Ausführungsform der Fig 1 und wird nachfolgend im Hinblick auf die Unterscheide beschrieben. Das SEP 1 ist in Fig. 3 vor einem Scheinwerfer 5 eines Fahrzeugs 4 positioniert. Das SEP 1 weist eine Lichterfassungseinheit 2 und eine erste Kamera 10 auf und weist im Gegensatz zur Ausführungsform der Fig. 1 keine zweite Kamera 20 sondern lediglich eine erste Kamera 10 auf. Die erste Kamera 10 ist orts- und drehfest an der Lichterfassungseinheit 2 befestigt, was in Fig. 3 durch einen schwarzen Balken visualisiert ist, der die Lichterfassungseinheit 2 und die erste Kamera 10 verbindet. Die Lichterfassungseinheit 2 und die erste Kamera 10 sind in Richtung desselben Halbraums ausgerichtet. Im Gegensatz zu der Ausführungsform der Figur 1 schließen die optische Achse 3 der Lichterfassungseinheit 2 und die optische Achse 13 der ersten Kamera 10 in Draufsicht einen Winkel ein und sind nicht parallel zueinander angeordnet. Die erste Kamera 10 ist in dieser Ausführungsform bezüglich zur Lichterfassungseinheit 2 also derart angeordnet, dass deren optische Achsen 3, 13 unter einem Winkel zueinander angeordnet sind.

Fig. 4a zeigt eine weitere Ausführungsform eines SEP 1 in einer Seitenansicht. Die Sichtachse verläuft dabei entlang der optischen Achse 3 der Lichterfassungseinheit 2. Das SEP 1 ist vor einem Fahrzeug 4 positioniert. Das SEP 1 weist eine erste Kamera 10 auf, die orts- und drehfest an der Lichterfassungseinheit 2 angeordnet ist. In der dargestellten Ausführungsform ist die erste Kamera 10 in einer horizontalen Ebene, die durch die optische Achse 3 der Lichterfassungseinheit 2 verläuft, angeordnet. Die erste Kamera 10 ist dabei derart ausgerichtet, dass die optische Achse 13 der ersten Kamera 10 in einer gemeinsamen Ebene 12 mit der optischen Achse 3 der Lichterfassungseinheit 2 liegt. Die optische Achse 13 der ersten Kamera 10 kann dabei parallel zur optischen Achse 3 der Lichterfassungseinheit 2 ausgerichtet sein, oder mit der optische Achse 3 der Lichterfassungseinheit 2 einen Winkel einschließen.

Fig. 4b zeigt eine erste Aufnahme 11 des Scheinwerfers 5,6 der ersten Kamera 10 und eine Positionierungshilfe 14, die die erste Aufnahme 11 überlagert. Die Positionierungshilfe 14 stellt eine Abbildung der gemeinsamen Ebene 12 auf die Bildebene der ersten Kamera 10 dar. Die Positionierungshilfe 14 ermöglicht es, die Lage der optischen Achse 3 der Lichterfassungseinheit 2 in einer Richtung senkrecht zur gemeinsamen Ebene 12 in Bezug auf das Fahrzeug 4 zu bestimmen. In der Ausführungsform der Fig. 4 ist die gemeinsame Ebene 12 horizontal angeordnet und die Positionierungshilfe 14 ermöglicht es somit die Lage der Lichterfassungseinheit 3 und ihrer optische Achse 13 in vertikaler Richtung zu bestimmen. Dies kann beispielsweise zur Erzeugung einer Positionierungsanweisung genutzt werden oder selbst als Positionierungsanweisung dienen.

In der Darstellung der Fig. 4 ist die Lichterfassungseinheit 2 unter dem Scheinwerfer 5 angeordnet, sodass die optische Achse 3 der Lichterfassungseinheit 2 den Scheinwerfer 5 nicht schneidet. Wird das SEP 1, insbesondere die Lichterfassungseinheit 2 mit der daran befestigten ersten Kamera 10, nun nach oben verschoben, wandert die Abbildung des Scheinwerfers 6 im erfassten Bild 11 nach unten und in Richtung der Positionierungshilfe 14. Wenn die Positionierungshilfe 14 die Abbildung des Scheinwerfers 6 in der ersten Aufnahme 11 schneidet, liegt auch die optische Achse der Lichterfassungseinheit 3 in vertikaler Richtung auf gleicher Höhe mit dem Scheinwerfer 5.

Die Figuren 5a und 5b zeigen eine ähnliche Ausführungsform des SEP. Im Unterschied zu den Figuren 4a und 4b, ist die gemeinsame Ebene 12, in der die optische Achse der ersten Kamera 13 und die optische Achse der Lichterfassungseinheit 3 angeordnet sind, nicht horizontal ausgerichtet. Die gemeinsame Ebene 12 schließt also einen Winkel mit der Horizontalen ein. Folglich ermöglicht es die Positionierungshilfe 14 die Lage der Lichterfassungseinheit 3 und ihrer optische Achse 13 in einer Richtung zu bestimmen, die nicht vertikal ist, sondern senkrecht auf der gemeinsamen Ebene 12 steht.

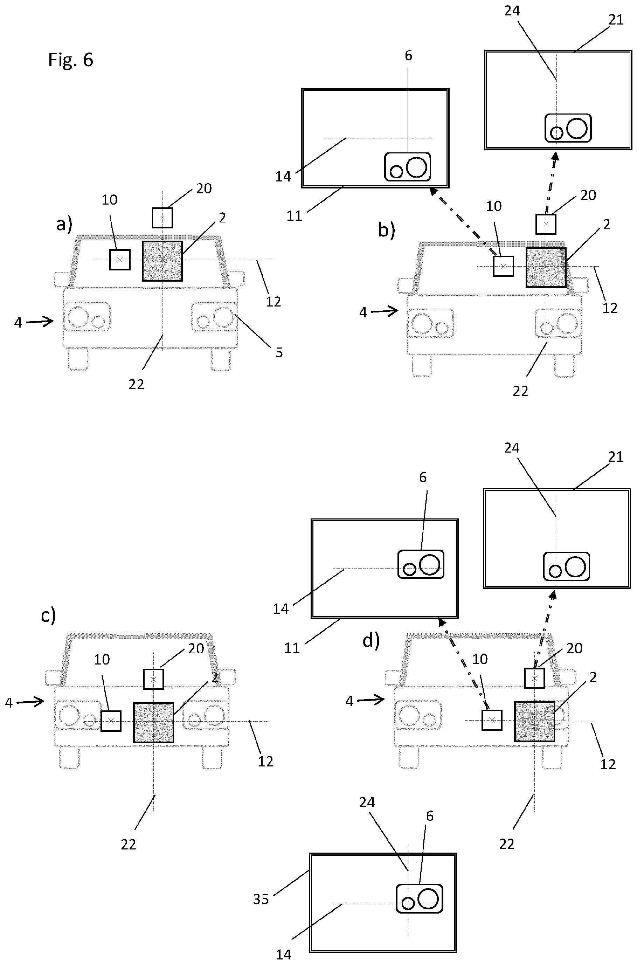

Fig. 6 zeigt eine weitere Ausführungsform eines SEP 1. Im Unterschied zu den vorigen Ausführungsformen der Figuren 3-5 weist das SEP 1 eine erste Kamera 10, eine zweite Kamera 20 auf und entspricht im Wesentlichen dem SEP der Figur 1. Das SEP 1 ist in einer Seitenansicht dargestellt. Die Sichtachse verläuft dabei, wie in den Figuren 4 und 5 entlang der optischen Achse 3 der Lichterfassungseinheit 2. Das SEP 1 ist vor einem Fahrzeug 4 positioniert. Die erste Kamera 10 und die zweite Kamera 20 sind orts- und drehfest an der Lichterfassungseinheit 2 angeordnet.

In der dargestellten Ausführungsform ist die erste Kamera 10 in einer horizontalen Ebene, die durch die optische Achse 3 der Lichterfassungseinheit 2 verläuft, angeordnet. Die erste Kamera 10 ist dabei derart ausgerichtet, dass die optische Achse 13 der ersten Kamera 10 in einer gemeinsamen Ebene 12 mit der optischen Achse 3 der Lichterfassungseinheit 2 liegt. Die zweite Kamera 20 ist in einer vertikalen Ebene, die durch die optische Achse 3 der Lichterfassungseinheit verläuft, angeordnet. Die zweite Kamera 20 ist dabei derart ausgerichtet, dass die optische Achse 23 der zweiten Kamera 20 in einer gemeinsamen Ebene 22 mit der optischen Achse 3 der Lichterfassungseinheit 2 liegt.

Die Figuren 6b und 6d zeigen jeweils eine erste Aufnahme 11 des Scheinwerfers 5,6 der ersten Kamera 10 und eine zweite Aufnahme 21 des Scheinwerfers 5, 6 der zweiten Kamera 20. Die erste Aufnahme 11 ist von einer ersten Positionierungshilfe 14 überlagert. Die erste Positionierungshilfe 14 stellt eine Abbildung der gemeinsamen Ebene 12 auf die Bildebene der ersten Kamera 13 dar. Die erste Positionierungshilfe 14 ermöglicht es die Lage der optischen Achse 3 der Lichterfassungseinheit 2 in einer Richtung senkrecht zur ersten gemeinsamen Ebene 12 in Bezug auf das Fahrzeug 4 zu bestimmen. In der Ausführungsform der Fig. 6 ist die erste gemeinsame Ebene 12 horizontal angeordnet und die erste Positionierungshilfe 14 ermöglicht es somit die Lage der Lichterfassungseinheit 2 und ihrer optische Achse 3 in vertikaler Richtung zu bestimmen.

Die zweite Aufnahme 21 ist von einer zweiten Positionierungshilfe 24 überlagert. Die zweite Positionierungshilfe 24 stellt eine Abbildung der zweiten gemeinsamen Ebene 22 auf die Bildebene der zweiten Kamera 23 dar. Die zweite Positionierungshilfe 24 ermöglicht es, die Lage der optischen Achse 3 der Lichterfassungseinheit 2 in einer Richtung senkrecht zur zweiten gemeinsamen Ebene 12 in Bezug auf das Fahrzeug 4 zu bestimmen. In der Ausführungsform der Fig. 6 ist die zweite gemeinsame Ebene 22 vertikal angeordnet und die zweite Positionierungshilfe 24 ermöglicht es somit die Lage der Lichterfassungseinheit 2 und ihrer optische Achse 3 in horizontaler Richtung zu bestimmen.

Es sind auch Ausführungsformen möglich, in denen keine der beiden gemeinsamen Ebenen 12, 22 horizontal oder vertikal ausgerichtet sind. Auch sind Ausführungsformen möglich, in denen die optischen Achsen 13, 23 der ersten und/oder zweite Kamera 10, 20 nicht parallel oder parallel zur optischen Achse der Lichterfassungseinheit 3 ausgerichtet sind.

Die Figuren 6a bis 6d veranschaulichen, wie das SEP vor dem Scheinwerfer 5 des Fahrzeugs 4 positioniert werden kann. In Fig. 6a schneidet die optische Achse 3 der Lichterfassungseinheit 2 den Scheinwerfer nicht, da die Lichterfassungseinheit 2 zu weit links und zu weit oben angeordnet ist. In Figur 6b wurde das SEP 1 in Bezug auf Fig. 6a nach rechts verschoben, sodass die zweite Positionierungshilfe 24 die Abbildung des Scheinwerfers 6 schneidet. Somit ist die Lichterfassungseinheit 2 in horizontaler Richtung bestimmungsgemäß, also in horizontaler Richtung in der Sollposition, positioniert. In Figur 6c wurde das SEP 1 ausgehend von der in Fig. 6a gezeigten Position in vertikaler Richtung nach unten verschoben, so dass die erste Positionierungshilfe 14 die Abbildung des Scheinwerfers 5 schneidet. Somit ist die Lichterfassungseinheit 2 in vertikaler Richtung bestimmungsgemäß, also in vertikaler Richtung in Sollposition, positioniert. Fig. 6d zeigt die Lichterfassungseinheit 2 in einer Position, in der die erste Positionierungshilfe 14 die Abbildung des Scheinwerfers 6 in der ersten Aufnahme 11 schneidet und die zweite Positionierungshilfe 24 die Abbildung des Scheinwerfers 6 in der zweiten Aufnahme 21 schneidet. Somit ist die Lichterfassungseinheit 3 in horizontaler und vertikaler Richtung bestimmungsgemäß, also sowohl in vertikaler Richtung als auch in horizontaler Richtung in Sollposition positioniert. Es ist ebenso möglich, eine Aufnahme 35 zu erzeugen, in der sowohl die erste Positionierungshilfe 14 als auch die zweite Positionierungshilfe 24 angezeigt werden. Eine derartige Aufnahme 35 mit erster Positionierungshilfe 14 und zweiter Positionierungshilfe 24 kann beispielsweise durch einen Prozessor 7 auf Grundlage des Abstands zwischen Lichterfassungseinheit 2 und Scheinwerfer 5 in Richtung der Sichtachse, sowie der ersten Aufnahme 10 und zweiten Aufnahme 20 berechnet werden und durch eine Anzeigevorrichtung 7 angezeigt werden. Die Positionierungshilfen 14, 24 können hierbei wahlweise zusammen mit der ersten Aufnahme 10 oder mit der zweiten Aufnahme 20 gezeigt werden. Eine Aufnahme 35 mit erster 14 und zweiter Positionierungshilfe 24 ist in Figur 6d gezeigt.

Der Abstand zwischen Lichterfassungseinheit 2 und Scheinwerfer 5 in Richtung der Sichtachse kann beispielsweise über Stereoskopie bzw. Triangulation auf Grundlage der erfassten ersten und zweiten Aufnahmen 21, 22, sowie den Relativpositionen von erster Kamera 10, zweiter Kamera 20 und Lichterfassungseinheit 2 bestimmt werden.

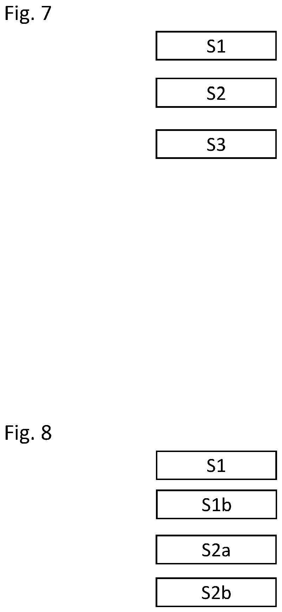

Fig. 7 zeigt ein Blockdiagram das die Schritte einer Ausführungsform eines Verfahrens zum Positionieren des Scheinwerfer-Einstell-Prüfgeräts darstellt. In einem ersten Schritt S1 werden dabei eine oder mehrere erste Aufnahmen 11 des Scheinwerfers 5 mit der ersten Kamera 10 erzeugt. In einem weiteren Schritt S2 werden diese Aufnahmen 11 zur Positionierung des SEP 1 in Bezug auf den Scheinwerfer verwendet.

Fig. 8 zeigt ein weiteres Blockdiagram mit Schritten einer weiteren Ausführungsform eines Verfahrens zum Positionieren des Scheinwerfer-Einstell-Prüfgeräts. Das Verfahren umfasst einen ersten Schritt S1 in dem eine oder mehrere erste Aufnahmen 11 eines Scheinwerfers 5 mit einer ersten Kamera 10 erzeugt werden. In einem nächsten Schritt S1b werden eine oder mehrere zweite Aufnahmen 21 eines Scheinwerfers 5 mit einer zweiten Kamera 20 erzeugt. In einem weiteren Schritt S2a wird auf Grundlage der ersten Aufnahmen 11 und der zweiten Aufnahmen 21, und den Relativpositionen von erster Kamera 10, zweiter Kamera 20 und Lichterfassungseinheit 2, ein Abstand zwischen Scheinwerfer 5 und Lichterfassungseinheit 2 bestimmt. Die Bestimmung des Abstands kann beispielsweise durch einen Prozessor 7 erfolgen. Ein weiterer Schritt kann beispielsweise das Erfassen von Relativpositionen von erster Kamera 10, zweiter Kamera 20 und Lichterfassungseinheit 2 zueinander erfasst werden. Die Relativpositionen können beispielsweise festgelegt sein und in einem Speichermedium hinterlegt sein. Relativpositionen können beispielsweise auch durch Lagesensoren erfassbar sein oder von einem Benutzer eingegeben werden.

Anschließend kann die Lichterfassungseinheit 2 in einem nächsten Schritt S2b derart positioniert werden, dass der Abstand zwischen Scheinwerfer 5 und Lichterfassungseinheit 2 einem Sollabstand entspricht. Die Positionierung kann beispielsweise durch Positionieranweisungen erfolgen, die an einen Benutzer oder an ein technisches Gerät übermittelt werden und die Lichterfassungseinheit 2 entsprechend den Anweisungen bewegen. Die Anweisungen können beispielsweise auf Grundlage einer Differenz zwischen der Ist-Position, die in Schritt S2a bestimmt wird, und einer Sollposition, die vorbestimmt sein kann, ermittelt werden. Die Anweisungen können beispielsweise in Form von Pfeilen, die in die Richtung weisen, in die das SEP zu verschieben ist, dargestellt werden.

### Bezugszeichenliste

- 1: Scheinwerfer-Einstell-Prüfgerät
- 2: Lichterfassungseinheit
- 3: optische Achse der Lichterfassungseinheit
- 4: Fahrzeug
- 5: Scheinwerfer
- 6: Aufnahme des Scheinwerfers
- 7: Prozessor
- 8: Anzeigevorrichtung
- 10: erste Kamera
- 11: erste Aufnahme
- 12: erste Ebene
- 13: erste optische Achse
- 14: (erste) Positionierungshilfe
- 20: zweite Kamera
- 21: zweite Aufnahme
- 22: zweite Ebene
- 23: zweite optische Achse
- 24: (zweite) Positionierungshilfe
- 31: Stativanordnung
- 32: Verschiebemittel
- 35: Aufnahme mit erster und zweiter Positionierungshilfe

## Patentansprüche

1. Scheinwerfer-Einstell-Prüfgerät (1), aufweisend
- eine Lichterfassungseinheit (2), die dazu eingerichtet ist, eine von einem Scheinwerfer (5) eines Fahrzeugs (4) erzeugte Lichtverteilung zu erfassen,
- eine erste Kamera (10), die dazu eingerichtet ist, den Scheinwerfer (5) zu erfassen und eine erste Aufnahme (11) des Scheinwerfers (5) zu erzeugen.

2. Scheinwerfer-Einstell-Prüfgerät (1) nach dem vorangehenden Anspruch, weiter aufweisend eine zweite Kamera (20), die dazu eingerichtet ist, den Scheinwerfer (5) zu erfassen und eine zweite Aufnahme (20) des Scheinwerfers (5) zu erzeugen.

3. Scheinwerfer-Einstell-Prüfgerät (1) nach dem vorangehenden Anspruch, weiter aufweisend einen Prozessor (7), der dazu eingerichtet ist, den Abstand zwischen Scheinwerfer-Einstell-Prüfgerät (1) und Scheinwerfer (5) auf Grundlage der ersten Aufnahme (10) und der zweiten Aufnahme (20) zu bestimmen.

4. Scheinwerfer-Einstell-Prüfgerät (1) nach einem der beiden vorangehenden Ansprüche, wobei
- die erste Kamera (10) in einer vertikalen Ebene, die durch die optische Achse (3) der Lichterfassungseinheit (2) verläuft, angeordnet ist; und/oder
- die zweite Kamera (20) in einer horizontalen Ebene, die durch die optische Achse (3) der Lichterfassungseinheit (2) verläuft, angeordnet ist.

5. Scheinwerfer-Einstell-Prüfgerät (1) nach einem der vorangehenden Ansprüche,
wobei die erste Kamera (10) in Bezug zur Lichterfassungseinheit (2) derart angeordnet ist, dass eine optische Achse (13) der ersten Kamera (10) in einer ersten gemeinsamen Ebene (12) mit der optischen Achse (3) der Lichterfassungseinheit (2) liegt; und/oder
die zweite Kamera (10) in Bezug zur Lichterfassungseinheit (2) derart angeordnet ist, dass eine optische Achse (23) der zweiten Kamera (20) in einer zweiten gemeinsamen Ebene (22) mit der optischen Achse (3) der Lichterfassungseinheit (2) liegt.

6. Scheinwerfer-Einstell-Prüfgerät (1) nach einem der vorangehenden Ansprüche, weiter aufweisend eine Anzeigevorrichtung (8), die dazu eingerichtet ist, die von der ersten Kamera (10) erzeugte erste Aufnahme (11) und/oder die von der zweiten Kamera (20) erzeugte zweite Aufnahme (21) und/oder eine Positionierungshilfe (14, 24) und/oder Positionierungsanweisung anzuzeigen.

7. Scheinwerfer-Einstell-Prüfgerät (1) nach den beiden vorangehenden Ansprüchen, wobei die Positionierungshilfe (14, 24) eine Gerade ist, die eine Abbildung der ersten gemeinsamen Ebene (12) auf eine Bildebene der ersten Kamera (10) ist, und/oder die eine Abbildung der zweiten gemeinsamen Ebene (22) auf eine Bildebene der zweiten Kamera (20) ist.

8. Scheinwerfer-Einstell-Prüfgerät (1) nach einem der vorangehenden Ansprüche,
wobei die optische Achse (13) der ersten Kamera (10) und die optische Achse (3) der Lichterfassungseinheit (2) zueinander parallel sind, oder einen Winkel von weniger als 30°, bevorzugt weniger als 15° einschlie-ßen, und/oder
wobei die erste Kamera (10) und/oder die zweite Kamera (20) adaptiv an die Aufnahmeverhältnisse, insbesondere die vom Scheinwerfer (5) erzeugte Lichtverteilung, konfigurierbar ist.

9. Scheinwerfer-Einstell-Prüfgerät (1) nach einem der vorangehenden Ansprüche, weiter aufweisend einen Prozessor (7), der dazu eingerichtet ist, auf Grundlage der ersten Aufnahme (11) und/oder der zweiten Aufnahme (21) Scheinwerferinformationen des Scheinwerfers (5) zu erzeugen, und der Prozessor (7) vorzugsweise dazu eingerichtet ist, aus den Scheinwerferinformationen Daten abzuleiten, insbesondere einen Scheinwerfertyp, einen Fahrzeugtyp, einen Sollabstand und/oder eine Sollpositionen des Scheinwerfer-Einstell-Prüfgeräts (1) vor einem Fahrzeug (4).

10. Scheinwerfer-Einstell-Prüfgerät (1) nach dem vorangehenden Anspruch, weiter aufweisend eine Speichereinheit, die dazu eingerichtet ist, die Scheinwerferinformationen des Scheinwerfers (5) und/oder erste Aufnahme (11) und/oder zweite Aufnahme (21) und/oder ermittelte Abstände und/oder die abgeleiteten Daten zu speichern.

11. Verfahren zum Positionieren eines Scheinwerfer-Einstell-Prüfgeräts (1) nach einem der vorangehenden Ansprüche vor einem Scheinwerfer (5) eines Fahrzeugs (4), aufweisend die Schritte:
- Erzeugen einer oder mehrerer von ersten Aufnahmen (11) des Scheinwerfers (5) mit der ersten Kamera (10),
- Verwenden der erzeugten erste/n Aufnahme/n (11) zur Positionierung des Scheinwerfer-Einstell-Prüfgeräts (1) vor dem Scheinwerfer (5).

12. Verfahren nach dem vorangehenden Anspruch, wobei das Scheinwerfer-Einstell-Prüfgerät (1) eine zweite Kamera (20) aufweist, weiter aufweisend die Schritte:
- Erzeugen einer oder mehrerer von zweiten Aufnahmen (21) des Scheinwerfers (5) mit der zweiten Kamera (20),
- Verwenden der erste/n Aufnahme/n (11) und der zweite/n Aufnahme/n (21) zur Positionierung des Scheinwerfer-Einstell-Prüfgeräts (1) vor dem Scheinwerfer (5).

13. Verfahren nach dem vorangehenden Anspruch, weiter aufweisend die Schritte:
- Bestimmen eines Abstands zwischen Scheinwerfer (5) und Lichterfassungseinheit (2) auf Grundlage der erste/n Aufnahme/n (11) und zweite/n Aufnahme/n (21),
- Positionieren des Scheinwerfer-Einstell-Prüfgeräts (1) derart, dass der Abstand zwischen Scheinwerfer (5) und Lichterfassungseinheit (2) einem Sollabstand entspricht.

14. Verfahren nach einem der Ansprüche 11-13, weiter aufweisend die Schritte:
- Anzeigen der erzeugten erste/n Aufnahme/n (11) und/oder zweite/n Aufnahme/n (21) und einer ersten Positionierungshilfe (14) und/oder zweiten Positionierungshilfe (24) mittels einer Anzeigevorrichtung (8), wobei die Positionierungshilfen (14, 24) Geraden sind,
- Positionieren des Scheinwerfer-Einstell-Prüfgeräts (1) vor dem Scheinwerfer (5) derart,
dass die erste Positionierungshilfe (14) einen vorbestimmten Abschnitt in der/den erste/n Aufnahme/n des Scheinwerfers schneidet, und/oder
dass die zweite Positionierungshilfe (24) den vorbestimmten Abschnitt in der/den zweite/n Aufnahme/n des Scheinwerfers schneidet.

15. Verfahren nach einem der Ansprüche 11-14, weiter aufweisend die Schritte:
- Erzeugen einer Lichtverteilung durch den Scheinwerfer (5),
- Erfassen der vom Scheinwerfer (5) erzeugten Lichtverteilung durch die Lichterfassungseinheit (2), und
- Ausrichten des Scheinwerfers (5) derart, dass die erfasste Lichtverteilung vorbestimmte Kriterien erfüllt.
